(19) Europäisches Patentamt
European Patent Office
Office européen des brevets

(11) **EP 4 024 295 A1**

(12) **EUROPEAN PATENT APPLICATION**
published in accordance with Art. 153(4) EPC

(43) Date of publication:
**06.07.2022 Bulletin 2022/27**

(21) Application number: **19948147.4**

(22) Date of filing: **30.09.2019**

(51) International Patent Classification (IPC):
**G06N 20/00** (2019.01)    **G06Q 10/04** (2012.01)

(52) Cooperative Patent Classification (CPC):
**G06N 20/00; G06Q 10/04;** Y02P 80/10

(86) International application number:
**PCT/CN2019/109668**

(87) International publication number:
**WO 2021/062748 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **WANG, Dehui
Beijing 100102 (CN)**

• **JIANG, Ning
Beijing 100102 (CN)**
• **ZHANG, Tuo
Beijing 201100 (CN)**
• **TIAN, Zhongwei
Beijing 100102 (CN)**

(74) Representative: **Isarpatent
Patent- und Rechtsanwälte Barth
Charles Hassa Peckmann & Partner mbB
Friedrichstrasse 31
80801 München (DE)**

(54) **OPTIMIZATION METHOD AND APPARATUS FOR INTEGRATED ENERGY SYSTEM AND COMPUTER READABLE STORAGE MEDIUM**

(57)    An optimization method and apparatus for an integrated energy system and a computer readable storage medium. The method comprises: receiving an optimization task including an optimization goal; on the basis of the optimization goal and the simulation model of an integrated energy system, establishing a nonlinear equation set; solving the nonlinear equation set on the basis of a linear programming algorithm to obtain an optimization result; and outputting the optimization result, wherein an establishment process for the simulation model comprises: determining the topological structure of the integrated energy system, the topological structure including devices of the integrated energy system and a connection attribute between the devices; determining general models of the devices and a connector model corresponding to the connection attribute; connecting the general models by means of the connector model to form a simulation model of the integrated energy system; and training the simulation model. Various optimization tasks, such as energy production optimization scheduling and factory peak load shifting energy consumption, can be performed.

Fig. 11

## Description

### Technical Field

The present invention relates to the technical field of integrated energy, in particular to a method and an apparatus for optimizing an integrated energy system, and a computer-readable storage medium.

### Background Art

Comprehensive energy service refers to the use of advanced physical information technology and innovative management models in an area to integrate coal, petroleum, natural gas, electric power, thermal energy and other energy sources in the area, thereby achieving coordinated planning, optimal operation, collaborative management, interactive response, complementation and mutual assistance among various heterogeneous energy subsystems.

An integrated energy system capable of providing integrated energy services refers to an integrated system of energy production, supply and marketing that is built after organized coordination and optimization of generation, transmission and distribution (energy network), conversion, storage, consumption of energy, and other links in processes of planning, construction, operation, etc. It mainly consists of energy supply networks (such as power supply, gas supply, and cooling/heating networks), energy exchange links (such as CCHP units, generator sets, boilers, air conditioners, and heat pumps), energy storage links (electricity storage, gas storage, heat storage, cold storage, etc.), terminal integrated energy supply units (such as microgrids) and a large number of end users.

At present, a process for controlling an integrated energy system is inconvenient and complex.

### Summary of the Invention

Embodiments of the present invention provide a method and an apparatus for optimizing an integrated energy system, and a computer-readable storage medium.

A technical solution provided by an embodiment of the present invention is as follows:

a method for optimizing an integrated energy system, the integrated energy system including non-linear devices, the method comprising:

receiving an optimization task that contains an optimization objective;
building a system of nonlinear equations on the basis of the optimization objective and a simulation model of the integrated energy system;
solving the system of nonlinear equations on the basis of a linear programming algorithm to obtain an optimization result; outputting the optimization result;
the process of establishing the simulation model comprises:

determining the topological structure of an integrated energy system, the topological structure comprising the devices of the integrated energy system and the connection attributes between the devices;
determining general models of the devices and a connector model corresponding to the connection attributes;
connecting the general models by means of the connector model so as to form a simulation model of the integrated energy system;
training the simulation model.

In one embodiment, the integrated energy system further contains linear devices;

the method further comprises a process of pregenerating general models of each linear device and a process of pregenerating general models of each nonlinear device, wherein the process of generating general models of each nonlinear device comprises:

determining complete design point data of each target mechanism process of each nonlinear device;
in a ratio of a similarity number supported by a similarity criterion to a similarity number based on the design point data, establishing a descriptive formula of the nonlinear mechanism process to obtain a general model of the nonlinear mechanism process; a general model of the nonlinear mechanism process comprises variable parameters that change nonlinearly with actual working condition parameters;
constructing a machine learning algorithm between the actual working condition parameters and the variable parameters, and establishing an association between the machine learning algorithm and the general model of the nonlinear mechanism process; and
forming the general models of all target nonlinear general processes of each nonlinear device and the machine learning algorithm associated therewith into a general model of the nonlinear device.

In one embodiment, said training the simulation model comprises:

obtaining historical data of the devices during the running process of the simulation model; and
training the general models on the basis of historical data of the devices.

In one embodiment, said training the general models on the basis of historical data of the devices comprises: a process of training general models of nonlinear devices on the basis of historical data of nonlinear devices; the process comprises:

for each target nonlinear mechanism process of a nonlinear device, obtaining actual working condition parameters and historical data of variable parameters corresponding to the target nonlinear mechanism process of the nonlinear device, and training the machine learning algorithm by using the historical data, so as to obtain a variable parameter training model of the target nonlinear mechanism process;
substituting the variable parameter training model of the target nonlinear mechanism process into the general model of the target nonlinear mechanism process to obtain a trained model of the target nonlinear mechanism process of the nonlinear device; and
forming the trained models of all target nonlinear mechanism processes of the nonlinear device into a trained model of the nonlinear device.

In one embodiment, the nonlinear device comprises: a gas turbine and a heat pump:

target nonlinear mechanism processes of the gas turbine include: a process related to flow rate and pressure in an expansion turbine, and a process of energy conversion of thermal energy and mechanical energy;
target nonlinear mechanism processes of the heat pump include: a process of heat transfer, a process of converting thermal energy into kinetic energy, a process of pipeline resistance, and a process related to flow rate and pressure.

In one embodiment, the linear programming algorithm comprises at least one of the following: a MIP algorithm; a MILP algorithm.
An apparatus for optimizing an integrated energy system, the integrated energy system including nonlinear devices, the apparatus comprising:

a receiving module, configured to receive an optimization task that contains an optimization objective;
an equation system building module, configured to build a system of nonlinear equations on the basis of the optimization objective and a simulation model of the integrated energy system;
a solving module, configured to solve a system of equations on the basis of a linear programming algorithm to obtain an optimization result;
an output module, configured to output the optimization result;
the process of establishing the simulation model comprises:
determining the topological structure of an integrated energy system, the topological structure comprising the devices of the integrated energy system and the connection attributes between the devices; determining general models of the devices and a connector model corresponding to the connection attributes; connecting the general models by means of the connector model so as to form a simulation model of the integrated energy system; and training the simulation model.

In one embodiment, the integrated energy system further comprises linear devices; the devices include linear devices and nonlinear devices; the process of establishing the simulation model further comprises: a process of pregenerating general models of each linear device and nonlinear device, wherein the process of generating general models of each nonlinear device comprises: determining complete design point data of each target nonlinear mechanism process of each nonlinear device; in a ratio of a similarity number supported by a similarity criterion to a similarity number based on design point data, establishing a descriptive formula of the nonlinear mechanism process to obtain a general model of the nonlinear mechanism process; a general model of the nonlinear mechanism process comprises variable parameters that change nonlinearly with actual working condition parameters; constructing a machine learning algorithm between the actual working condition parameters and the variable parameters, and establishing an association between the machine learning algorithm and the general model of the nonlinear mechanism process; and forming the general models of all target nonlinear general processes of each nonlinear device and the machine learning algorithm associated therewith into a general model of the nonlinear device.

In one embodiment, the linear programming algorithm comprises at least one of the following: a MIP algorithm; a MILP algorithm. An apparatus for optimizing an integrated energy system, comprising a processor and a memory; an application program executable by the processor is stored in the memory, configured to cause the processor to execute any of the above-described methods for optimizing an integrated energy system.

A computer-readable storage medium, characterized in that it stores a computer-readable instruction that is configured to execute any of the above-described methods for optimizing an integrated energy system.

It is thus clear that in an embodiment of the present invention, an optimization task that contains an optimization objective and a constraint condition is received; a system of nonlinear equations is built on the basis of the optimization objective, the constraint condition, and a simulation model of the integrated energy system; the system of nonlinear equations is solved on the basis of a linear programming algorithm to obtain an optimization result; and the optimization result is outputted; the process of establishing the simulation model comprises: determining the topological structure of an integrated energy system, the topological structure comprising the devices of the integrated energy system and the connection attributes between the devices; determining general models of the devices and a connector model corresponding to the connection attributes; connecting the general models by means of the connector model so as to form a simulation model of the integrated energy system; and training the simulation model. A simulation model of an integrated energy system is formed on the basis of general models of devices and a connector model; the simulation model is trained, and a control command of the integrated energy system is generated on the basis of the trained simulation model. Therefore, by reusable general models, professional knowledge is shareable among various industries and users, which facilitates the construction of a simulation system for an integrated energy system and achieves greater efficiency in the control of an integrated energy system.

In addition, considering that during the actual operation of an integrated energy system, natural factors such as device aging and soot deposition, or an operator's change of an underlying parameter of a device may often lead to deviations of embedded device models from actual conditions and errors in calculation results, an embodiment of the present invention uses training to correct model parameters of devices according to actual operation conditions, thereby achieving higher accuracy.

For each target mechanism process of each nonlinear device, in a ratio of a similarity number supported by a similarity criterion to a similarity number based on design point data, a descriptive formula of the nonlinear mechanism process is established to obtain a general model of the nonlinear mechanism process, so that the model is applicable to a class of devices. In addition, a general model comprises variable parameters that vary nonlinearly with actual working condition parameters, and by constructing a machine learning algorithm between actual working condition parameters and the variable parameters, the variable parameters may be obtained through machine learning, and then the general model is made capable of self learning. Besides, for each target nonlinear mechanism process of a specific device of this type of device, actual working condition parameters and historical data of variable parameters corresponding to the target nonlinear mechanism process of the specific device are obtained, and the machine learning algorithm is trained by using historical data, so as to obtain a variable parameter training model of the target nonlinear mechanism process, and the variable parameter training model of the target nonlinear mechanism process is substituted into the general model of the target nonlinear mechanism process to obtain a trained model of the target nonlinear mechanism process of the specific device, that is, an instantiated model conforming to the characteristics of the specific device. Furthermore, by presetting default values for variable parameters, the nonlinear model may be made available in the event that there is no condition for training variable parameters on site, for example, when available historical data are insufficient.

**Brief Description of the Drawings**

Fig. 1 is a flow chart of a method for controlling an integrated energy system according to an embodiment of the present invention.

Fig. 2 is a schematic diagram of forming a simulation model of an integrated energy system on the basis of a connector model and general models of devices according to an embodiment of the present invention.

Fig. 3 is a schematic diagram of setting parameters of general models of devices according to an embodiment of the present invention.

Fig. 4 is a flow chart of a method for generating general models of nonlinear devices according to an embodiment of the present invention.

Fig. 5 is a block diagram of an apparatus for controlling an integrated energy system according to an embodiment of the present invention.

Fig. 6 is a structural diagram of an apparatus for controlling an integrated energy system that has a processor-memory structure according to an embodiment of the present invention.

Fig. 7 is an exemplary topological diagram of an integrated energy system according to an embodiment of the present invention.

Fig. 8 is a flow chart of a simulation method for an integrated energy system according to an embodiment of the present invention.

Fig. 9 is a structural diagram of a simulation apparatus for an integrated energy system according to an embodiment of the present invention.

Fig. 10 is a structural diagram of a simulation apparatus for an integrated energy system with a processor-memory structure according to an embodiment of the present invention.

Fig. 11 is a flow chart of an optimization method for an integrated energy system according to an embodiment of the present invention.

Fig. 12 is a structural diagram of an apparatus for optimizing an integrated energy system according to an embodiment of the present invention.

Fig. 13 is a structural diagram of an optimization apparatus with a processor-memory structure for an integrated energy system according to an embodiment of the present invention.

Fig. 14 is a system configuration diagram of a simulation example of an integrated energy system according to an embodiment of the present invention.

Fig. 15 is a system configuration diagram of an optimization example of an integrated energy system according to an embodiment of the present invention.

The reference numerals used in the drawings are as follows:

| 100 | Method for controlling an integrated energy system |
|---|---|
| 101 - 105 | Step |
| 201, 204, 205, 206, 207, 208, 209, 210 | Arrow |
| 202 | General model of gas turbine |
| 203, 211 | Connecting line |
| 212 | Billing module |
| 213 | General model of a lithium bromide heater |
| 214 | General model of a lithium bromide refrigerator |
| 215 | General model of a power supply load |
| 216 | General model of a heating load |
| 217 | General model of a cooling load |
| 220 | Parameter setting area |
| 221 | Temperature input box |
| 222 | Pressure ratio input box |
| 223 | Pressure recovery input box |
| 224 | Inlet temperature input box |

(continued)

| 225 | Air flow input box |
|---|---|
| 400 | Process of generating general models of nonlinear devices |
| 401 - 404 | Step |
| 500 | Apparatus for controlling an integrated energy system |
| 501 | Topological structure determining module |
| 502 | Model determining module |
| 503 | Simulation model forming module |
| 504 | Training module |
| 505 | Control command generating module |
| 600 | Apparatus for controlling an integrated energy system |
| 601 | Memory |
| 602 | Processor |
| 701 | Energy |
| 702 | Energy conversion part |
| 703 | Energy consumption part |
| 704 | Energy form at the end user |
| 70 | Natural gas |
| 71 | PV/WIND |
| 72 | Solar thermal energy |
| 73 | High-temperature heat storage |
| 74 | Compression heat pump |
| 75 | Absorption heat pump |
| 76 | Gas turbine |
| 77, 78 | Gas boiler |
| 79, 80 | Steam generator |
| 81 | Backpressure turbine |
| 82 | Medium-temperature heat storage |
| 83 | Compressed air conditioning |
| 84 | Absorption regulation |
| 85 | LP boiler |
| 86 | Cold storage |
| 87 | Low-temperature heat storage |
| 88 | Process power |
| 89 | In-process flow |
| 90 | Water treatment |
| 91 | Cold water island |
| 92 | Cooling process |
| 93 | Compressed air |
| 94 | Thermal treatment/casting/welding |

(continued)

| | |
|---|---|
| 95 | Grid |
| 96 | Steam |
| 97 | Refrigeration |
| 98 | Heating |
| 800 | Simulation method for an integrated energy system |
| 801 - 804 | Step |
| 900 | Simulation apparatus for an integrated energy system |
| 901 | Receiving module |
| 902 | Equation system building module |
| 903 | Solving module |
| 904 | Output module |
| 1000 | Simulation apparatus for an integrated energy system |
| 1100 | Optimization method for an integrated energy system |
| 1101 - 1104 | Step |
| 1200 | Apparatus for optimizing an integrated energy system |
| 1201 | Receiving module |
| 1202 | Equation system building module |
| 1203 | Solving module |
| 1204 | Output module |
| 1300 | Apparatus for optimizing an integrated energy system |
| 1301 | Memory |
| 1302 | Processor |
| 141 | Gas turbine |
| 142 | Grid |
| 143 | Photovoltaic system |
| 144 | Load 1 |
| 145 | Load 2 |
| 146 | Load 3 |
| 147 | Energy storage battery |

## Specific Embodiments

In order to make clearer the technical solutions and advantages of the present invention, the present invention will be described in greater detail below in conjunction with the drawings and embodiments. It should be understood that the specific embodiments described herein are only intended to illustrate the present invention, instead of limiting the protective scope of the present invention.

For conciseness and intuitiveness of description, solutions provided by the present invention will be elaborated below by describing several representative embodiments. The large number of details given in the embodiments are only intended to help understand the solutions provided by the present invention. However, it is readily apparent that the implementation of a technical solution provided by the present invention may not be limited to said details. In order to avoid unnecessary confusion with a solution provided by the present invention, some embodiments are described not in detail, but only structurally. Hereinafter, "comprising" means "including but not limited to", and "on the basis of..." means "at least on the basis of..., but not limited to being only on the basis of...". Due to the linguistic usage pattern of Chinese, when the quantity of an element is not specifically indicated below, it means that the quantity of the element may be one or more, or may be understood to be at least one.

In an embodiment of the present invention, reusable general models of devices are used to form a simulation model of an integrated energy system, and general models of devices are trained on the basis of historical data of the devices, so that the simulation model is trained, and a control command of the integrated energy system is generated on the basis of the trained simulation model, thereby reducing control complexity.

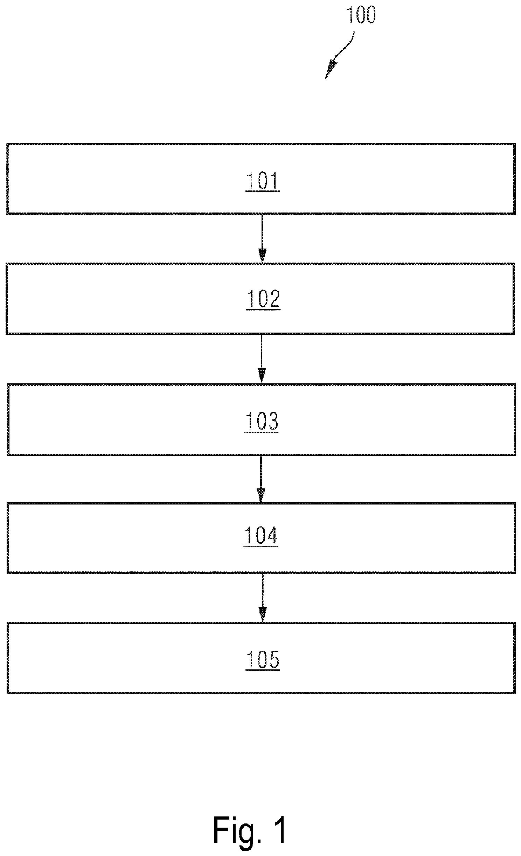

Fig. 1 is a flow chart of a method for controlling an integrated energy system according to an embodiment of the present invention. As shown in Fig. 1, the method comprises: Step 101: Determining the topological structure of an integrated energy system, the topological structure comprising the devices of the integrated energy system and the connection attributes between the devices.

Here, on the basis of inputs including various energy boundary conditions of a park (for example, operating time of air-conditioning unit; ambient temperature and humidity; situation of devices in workshops that have started operating; opening statuses of doors and windows in workshops, etc.) and design objectives, the topological structure of the integrated energy system is determined. The topological structure comprises the devices of the integrated energy system and the connection attributes between the devices.

Preferably, devices in an integrated energy system may include: an absorption chilling (AC) device, a multi-effect evaporation device (MED), a compression chilling (CC) device, a multi-stage flash distillation (MSFD) device, a combined heat and cold supply (CHC) device, a photovoltaic (PV) device, a cold water energy storage (CWS) device, a heat and cold convertible heat pump (rHP) device, an electric boiler (EB) device, a reverse osmosis (RO) device, an electrochemical energy storage (ECES) device, a steam turbine (ST) device, a gas boiler (GB) device, a water storage (WS) device, a gas turbine (GT) device, a wind turbine (WT) device, a gas turbine inlet cooler (HEX) device, an internal combustion engine (ICE) device, a heat pump (HP) device, an ice storage-integrated desalination (isiD) device, a high-temperature heat storage/low-temperature heat storage (HTS/LTS) device, a low-temperature heat storage (ITES) device, and an ice thermal energy storage (ITES) device.

Preferably, connection attributes between devices may include:

(1) the connection relationship between devices, wherein, for example, device A needs to be connected to device B, and device B needs to be connected to device C;
(2) the connection characteristics between devices, wherein, for example, when the connection relationship between devices has been determined, connection characteristics specifically include pipeline connection, electrical connection, and economic connection.

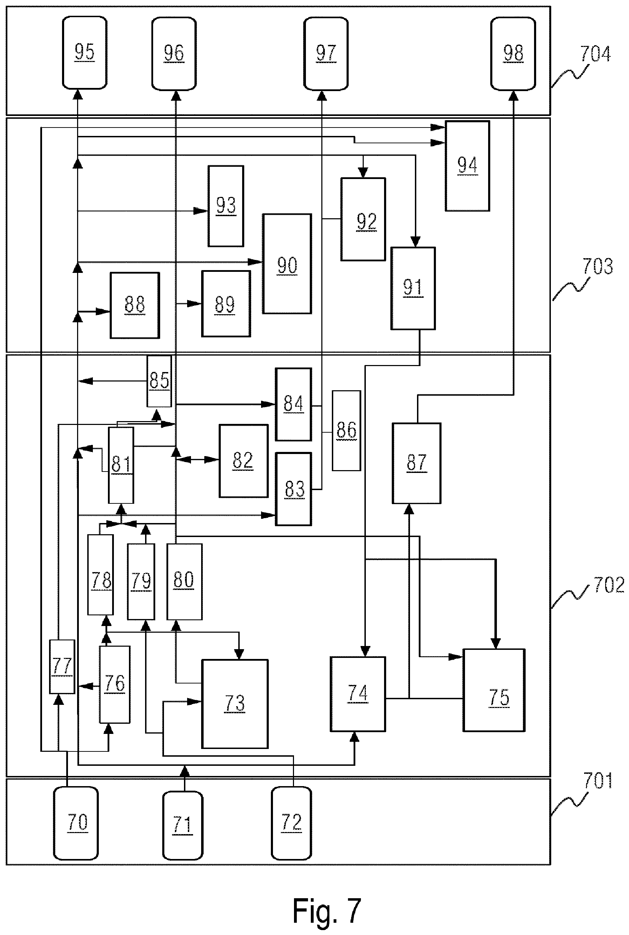

Fig. 7 is an exemplary topological structure diagram of an integrated energy system according to an embodiment of the present invention.

As is clear from Fig. 7, the topological structure of the integrated energy system comprises an energy source 701, an energy conversion part 702, an energy consumption part 703 and an energy form 704 at the end user. Among them,
the energy source 701 comprises: natural gas 70, PV/WIND 71, and solar thermal energy 72.

The energy conversion part 702 comprises: high-temperature heat storage 73, a compression heat pump 74, an absorption heat pump 75, a gas turbine 76, a first gas boiler 77, a second gas boiler 78, a first steam generator 79, a second steam generator 80, a backpressure turbine 81, medium-temperature heat storage 82, compressed air conditioning 83, absorption conditioning 84, an LP boiler 85, cold storage 86, and low-temperature heat storage 87.

The energy consumption part 703 comprises: process power 88, an in-process flow 89, water treatment 90, a cold water island 91, a cooling process 92, compressed air 93, and thermal treatment/casting/welding 94.

The energy form at the end user comprises: a grid 95, steam 96, cooling 97, and heating 98.

In addition, in this topological structure, there are connection attributes between devices, such as a pipeline connection between the high-temperature heat storage 73 and the second steam generator 80, or an electrical connection between the process power 88 and the grid 95.

Step 102: Determining general models of the devices and a connector model corresponding to the connection attributes.

Devices in a topological structure usually include linear devices and nonlinear devices, and the method further comprises a process of pregenerating general models of each linear device and general models of each nonlinear device. For the modeling of linear devices, a general linear or multiple regression method or another method may be adopted, which will not be described in detail again herein.

Preferably, in an embodiment of the present invention, a process of generating general models of each nonlinear device comprises:
determining complete design point data of each target nonlinear mechanism process of each nonlinear device; in a ratio of a similarity number supported by a similarity criterion to a similarity number based on design point data, establishing a descriptive formula of the nonlinear mechanism process to obtain a general model of the nonlinear mechanism process; a general model of the nonlinear mechanism process comprises variable parameters that change nonlinearly with actual working condition parameters; constructing a machine learning algorithm between the actual working condition parameters and the variable parameters, and establishing an association between the machine learning algorithm and the general model of the nonlinear mechanism process; and forming the general models of all target nonlinear general processes of each nonlinear device and the machine learning algorithm associated therewith into a general model of the nonlinear device.

Specifically, a connector model may be implemented as a wire model, a pipeline connecting line model, an economic connecting line model, etc.

Step 103: Connecting the general models by means of the connector model so as to form a simulation model of the integrated energy system.

For example, general models may be connected by means of the connector model by dragging and dropping on a graphical interface, thereby forming a simulation model of the integrated energy system. For general models with additional input parameters, additional input parameters may also be marked with visual arrows.

Step 104: Training the simulation model.

Specifically, training the simulation model comprises: obtaining historical data of each device in the integrated energy system during the running of the simulation model; training general models on the basis of historical data of the devices. When devices include linear devices and nonlinear devices, general models of linear devices are trained on the basis of historical data of linear devices, and general models of nonlinear devices are trained on the basis of historical data of nonlinear devices during the running of the simulation model.

Preferably, a user can freely define objects to be trained and the corresponding decision parameters, and freely select a training algorithm, the corresponding historical data, and appropriate technical parameters. Parameters of a model may be entered manually or, by means of automatic optimization, optimized according to stored long-term historical data and real-time data to obtain a model with higher accuracy. The data model and mechanism model obtained by training provide the data basis for subsequent prediction and optimization.

Preferably, a process of training general models of nonlinear devices comprises: for each target nonlinear mechanism process of a nonlinear device, obtaining actual working condition parameters and historical data of variable parameters corresponding to the target nonlinear mechanism process of the nonlinear device, and training the machine learning algorithm by using the historical data, so as to obtain a variable parameter training model of the target nonlinear mechanism process; substituting the variable parameter training model of the target nonlinear mechanism process into the general model of the target nonlinear mechanism process to obtain a trained model of the target nonlinear mechanism process of the nonlinear device; and forming the trained models of all target nonlinear mechanism processes of the nonlinear device into a trained model of the nonlinear device.

In one embodiment, a nonlinear device comprises: a gas turbine and a heat pump: target nonlinear mechanism processes of the gas turbine include: a process related to flow rate and pressure in an expansion turbine, and a process of energy conversion of thermal energy and mechanical energy.

In one embodiment, target nonlinear mechanism processes of the heat pump include: a process of heat transfer, a process of converting thermal energy into kinetic energy, a process of pipeline resistance, and a process related to flow rate and pressure.

While typical examples of the topological structure, device modeling, and nonlinear devices of an integrated energy system have been exemplarily described above, those of ordinary skill in the art can realize that this description is only exemplary, instead of being intended to limit the protection scope of embodiments of the present invention.

Step 105: Generating a control command of the integrated energy system on the basis of the trained simulation model.

Here, a control command of the integrated energy system may be generated on the basis of the trained simulation model. A control command may be a control command for a single device in an integrated energy system, or may be an integrated control command for an integrated energy system. In addition, a control command may be implemented as a simulation command or an optimization command. For example, an optimization task that contains an optimization objective is received; the optimization objective is inputted into the simulation model; the simulation model is enabled to output a control command that meets the constraint condition in the simulation model and achieves the optimization objective.

Preferably, the method further comprises: receiving a simulation task; running the simulation model on the basis of the simulation task, and outputting a simulation result; the simulation task comprises at least one of the following: a simulation task for device performance monitoring; a simulation task containing an assumed condition for operation; a simulation task for monitoring the performance of a connector model; and a simulation task for monitoring the overall performance of an integrated energy system.

Among them, a simulation task specifically comprises performance monitoring, energy conservation management, and system parameter optimization operation of an integrated energy system. An optimization task comprises:

optimal scheduling to bear a certain load in a certain period of time.

The process shown in Fig. 1 may be integrated into a software platform, and the process shown in Fig. 1 may be implemented on the basis of the software platform.

For example, the software platform can be compliant with the general IOT platform architecture and provide microservices, on which a PAAS layer and an SAAS layer are built. The front end is connected to the SCADA of the local data storage layer, or connected to another system through OPC UA to obtain data, and the platform system has the function of parsing the MQTT IoT protocol, so that different communication protocols may be converted into the MQTT protocol on each site platform for data communication. Compliant with the IEC61970 and IEC61850 standard data information model criteria, it not only realizes the transmission of data, but also comprises the free suggestion or reception of the hierarchical relationship, system connection, business logic, and other semantic relationships of various types of data.

About the software architecture of the software platform: various algorithm functions of the integrated energy service are closely interrelated, and can run independently, interact with each other, and operate collaboratively to complete a variety of energy management tasks, wherein, for example, component modules related to integrated energy, a big data analysis module, a system module, an optimization module, a simulation module, etc., are all based on the container technology, support distributed layout, support cross-platform interoperability, and support cloud platforms. The IEMS adopts MYSQL database and uses RABBITMQ to form message and data distribution bus technology, which is used for message transmission, data transmission and task distribution between algorithms and between algorithms and the front end. The JASON format is used for data transfer. CELERY is used for message communication and business coordination between DOCKERs.

With regard to the platform architecture of the software platform: it is mainly divided into an ADAPTOR layer, a PaaS layer and an SaaS layer for front-end data acquisition. The ADAPTOR layer is used to communicate with the SIEMENS SCADA system or SIEMENS DEOP, or with another system or device that is compliant with the OPC UA protocol, or directly receives the MQTT protocol. PaaS-layer services include services related to the functions of an integrated energy management and control system: data processing service, component model library service, model training service, energy system construction service, forecasting service, optimization service, report service, dashboard user interface service, and data analysis tool service; common PaaS-layer services related to information and communication include: message reception and distribution service, load balancing service, data management service, etc. SaaS services realize: monitoring and diagnosis of energy network data and performance, short-term forecasting of load and power generation, optimization of system parameter operation, optimal scheduling management of energy production and supply, management of staggered energy consumption in a factory, energy conservation management, multi-network coordination management, and predictive maintenance management.

In addition, the software platform can comprise a simulation environment and an optimization environment, and a simulation environment refers to the state of the system at a certain moment, which may be a state analyzed by connecting the following measurement points, or a state analyzed by adding some operational assumptions. Different from simulation, operation optimization refers to the overall optimal operation in a certain period of time, which relates to a time interval. They have respective simulation solvers and optimization solvers and respective intermediate interpreters, share one scene and problems to build a user graphical interface as an input system for semantics such as devices, measurement points, locations, and connection relationships, and, using their respective interpreters, form and solve mathematical problems received by their respective algorithms.

Therefore, in an embodiment of the present invention, through the design of the software platform, boundary conditions and design objectives of various energy sources in the park are inputted, and a reusable standard model is formed by data processing, model training, etc., while units matching historical loads are selected, forming a management and control software platform for an integrated energy system that achieves the optimal goal. In addition, through the capacity matching optimization of the system, the unit prices of electricity, heat, and gas may be reduced, the equipment costs of each energy module may be reduced, and the ability to consume renewable energy may be improved, which can effectively improve the economical efficiency of the system. Besides, after the construction of the software platform is completed, historical data and latest real-time data are integrated, corresponding model corrections are made, and various advanced algorithms are used to form a scheduling strategy operating in real time, thereby ensuring that a set optimal goal remains achievable during the operation of the system. This provides a reliable information technology foundation for subsequent real-time transactions on the electric power market, demand response, and real-time transactions on other energy markets.

Preferably, the software platform can also realize visualization of industrial energy data and transparent display of data. Employing a big data analysis strategy, on the basis of mechanism model and artificial intelligence technology, user load is predicted in real time and short-term operation of power generation prediction is dynamically optimized in real time to meet the current market needs of peak load shifting, tiered pricing for electricity, frequency modulation and voltage modulation, and energy conservation and consumption reduction in factories and the demand for free market transactions (futures and spot trading, on the trading market the previous day and the same day) in the future. In the medium and long term, the software platform can perform optimal operation management. It can monitor the mid-term performance and status of each component in the system, and perform real-time energy efficiency analysis. Various energy data collected in real time are used to carry out simulation analysis, formulate technical transformation plans, and analyze the economical efficiency of technology. In addition, the software platform can make full use of renewable energy, fossil fuels, residual temperature and pressure, new energy and other forms of resources, allowing them to cooperate with each other, and, through the flexible operation of networks and storage, innovative business mechanisms may be established and intelligent means may be adopted to achieve a high-quality, highly efficient and economical comprehensive supply of regional electricity, heat, cold, gas and other loads, thereby meeting the requirements for random changes in terminal loads.

In an embodiment of the present invention, an optimization algorithm automatically performs optimal scheduling of controllable resources through an underlying control system, and accurately reflects the effects produced by uncontrollable resources. In addition, the system can automatically identify changes in the system, so as to bring about automatic and flexible changes. The platform can choose optimization goals, including energy costs, carbon dioxide emissions, and efficiency.

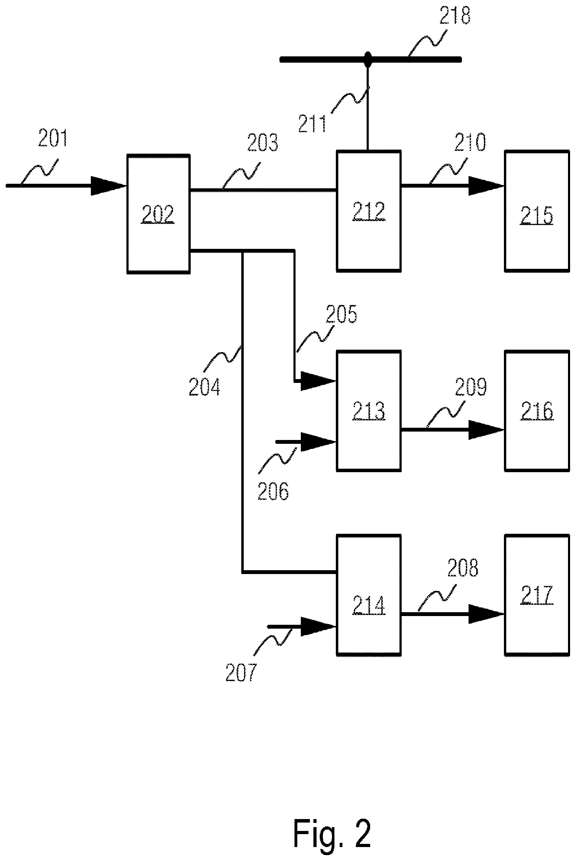

Fig. 2 is a schematic diagram of forming a simulation model of an integrated energy system on the basis of a connector model and general models of devices according to an embodiment of the present invention.

The general model 202 of a gas turbine, the general model 213 of a lithium bromide heater, the general model 214 of a lithium bromide refrigerator, the general model 215 of a power supply load, the general model 216 of a heating load, and the general model 217 of a cooling load have been established in advance. Then, by dragging, the general model 202 of a gas turbine, the general model 213 of a lithium bromide heater, and the general model 214 of a lithium bromide refrigerator are connected to each other to form a simulation model as shown in Fig. 2. A connector model can contain arrows and connections. An input may be provided for a general model on the basis of arrows; electrical connections, pipeline connections, or economic connections may be provided for general models on the basis of connecting lines. For example, the arrow 201, the arrow 210, the arrow 205, the arrow 206, the arrow 207, the arrow 208, and the arrow 209 may, respectively, provide an input to the general models to which the arrows point.

When a simulation model of an integrated energy system is formed on the basis of Fig. 2, localized parameters may be inputted for the simulation model.

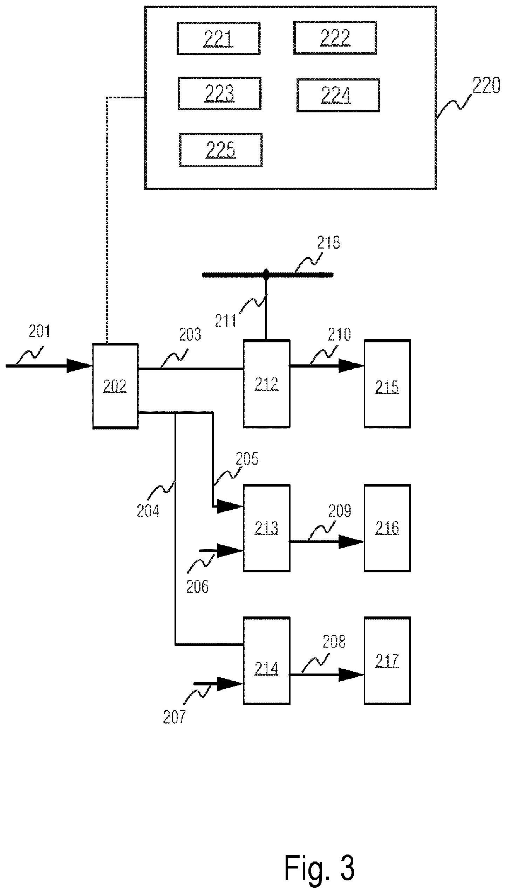

Fig. 3 is a schematic diagram of setting parameters of general models of devices according to an embodiment of the present invention.

As is clear from Fig. 3, the parameter setting area 220 is further displayed by triggering (for example, single-clicking or double-clicking) the general model 202 of a gas turbine in Fig. 2. In the parameter setting area 220, the parameter input boxes related to the general model 202 of a gas turbine are displayed, such as the display temperature input box 221, the pressure ratio input box 222, the pressure recovery input box 223, the inlet temperature input box 224 and the air flow input box 225. Then, the user can input parameters in these parameter input boxes, respectively, and these parameters are assigned to the general model 202 of a gas turbine.

Embodiments of the present invention further provide a method for generating general models of nonlinear devices.

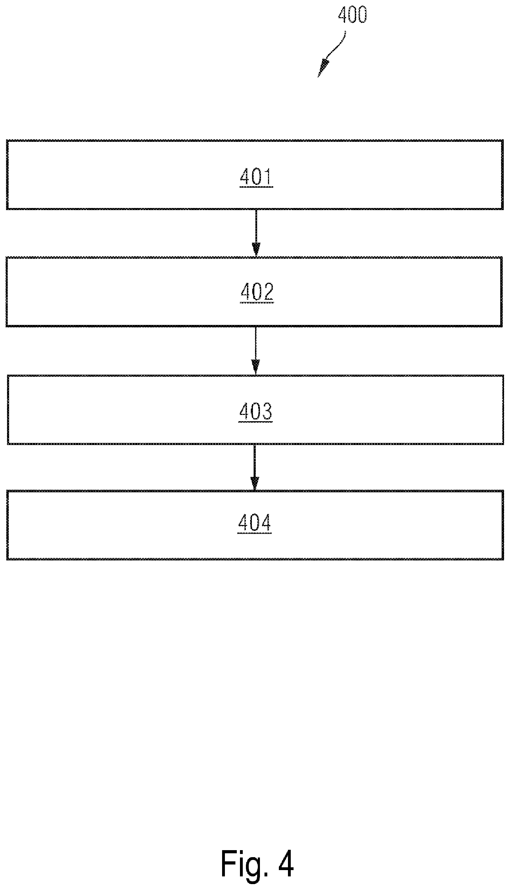

Fig. 4 is a flow chart of a method for generating general models of nonlinear devices according to an embodiment of the present invention.

As shown in Fig. 4, the method comprises:

Step 401: For each target nonlinear mechanism process of a nonlinear device, obtaining actual working condition parameters and historical data of variable parameters corresponding to the target nonlinear mechanism process of the nonlinear device.

In this step, a mechanism process may also be sometimes referred to as a physical process, for example, a heat transfer process, an electrical energy conversion process, or a process related to flow rate and pressure as mentioned above. For each nonlinear device, mechanism processes of interest, that is, mechanism processes that need to be modeled, may be determined, and these mechanism processes that need to be modeled are called target mechanism processes, wherein a target mechanism process that is nonlinear is called a target nonlinear mechanism process. For example, target nonlinear mechanism processes of a gas turbine may include: a process related to flow rate and pressure in an expansion turbine, and a process of energy conversion of thermal energy and mechanical energy; target nonlinear mechanism processes of a heat pump may include: a process of heat transfer, a process of converting thermal energy into kinetic energy, a process of pipeline resistance, and a process related to flow rate and pressure.

For each nonlinear mechanism process, complete design point data may be restored according to published design parameters and common design point information provided to the user by the manufacturer. For example, design point data of the general model related to flow rate and pressure may include pressure ratio and air flow, and on the basis of these design point data, relevant design parameters that are not available to the user, including its efficiency, inlet resistance, and bleed air flow, may be derived.

Step 402: In a ratio of a similarity number supported by a similarity criterion to a similarity number based on design point data, establishing a descriptive formula of the nonlinear mechanism process to obtain a general model of the nonlinear mechanism process; the general model comprises variable parameters that vary nonlinearly with actual working condition parameters.

Actual working condition parameters refer to the parameters of a specific device that change with actual working conditions. These include, for example, dimensions that change with mechanical wear caused by long-term use, or temperature that changes with seasons, or related parameters that change with different situations of work performance, etc. The variable parameters may have preset default values.

Since there may be different models for each nonlinear device, for example, taking compressors as an example, there may be compressors with different powers such as 5 M, 50 M, and 500 M, in order to establish general models of compressors, it is necessary to, in place of specific parameter values, use similarity numbers supported by similarity criteria. For example, still taking as an example the general model of the process related to flow rate and pressure, similarity numbers supported by similarity criteria for flow, pressure and power are used instead of specific parameters, wherein, for example, a similarity criterion for flow may be represented in the following formula (1):

$$\frac{\dfrac{G1\sqrt{T1}}{P1}}{\dfrac{G0\sqrt{T0}}{P0}} \qquad (1)$$

wherein G1 is the flow rate, T1 is the temperature, P1 is the pressure, G0 is the flow rate at the corresponding design point, T0 is the temperature at the corresponding design point, and P0 is the pressure at the corresponding design point.

Correspondingly, an obtained general model of the process related to flow rate and pressure may be represented in the following formula (2):

$$\frac{\dfrac{G1\sqrt{T1}}{P1}}{\dfrac{G0\sqrt{T0}}{P0}} = f(\text{a x IGV angle, b x similar transmission ratio})$$

wherein f() is a function, the coefficients a and b are variable parameters that change nonlinearly with actual working condition parameters, and, in practical applications, a default value may also be set for the variable parameters a and b. IGV is the angle of the inlet adjustable guide vane.

Step 403: Constructing a machine learning algorithm between the actual working condition parameters and the variable parameters.

In this step, a machine learning algorithm between the actual working condition parameters and the variable parameters may be constructed on the basis of a method for big data analysis by machine learning, such as a neural intelligent network or a support vector machine.

Step 404: Forming the general models of all target nonlinear general processes of each nonlinear device and the machine learning algorithm associated therewith into a general model of the nonlinear device.

In practical applications, after purchasing general models, users need to build simulation models of their respective integrated energy systems, in which case each general model needs to be associated with specific devices on site, and so the general model needs to be instantiated (which may be called training). Correspondingly, the process of training general models comprises:

Step 1: For each target nonlinear mechanism process of a specific device of this type of device, obtaining actual working condition parameters and historical data of variable parameters corresponding to the target nonlinear mechanism process of the specific device, and training the corresponding machine learning algorithm by using historical data, so as to obtain a variable parameter training model of the target nonlinear mechanism process.

In this step, during specific training, a set of historical data of actual working condition parameters is used as input sample values, the historical data of the variable parameters corresponding to the set of historical data of actual working condition parameters are used as output sample values, and, by training the machine learning algorithm with a large number of input sample values and the corresponding output sample values, a self-learning model, which is also called a training model, of the variable parameters may be obtained.

For example, still taking as an example the above-described process related to flow rate and pressure, historical data of relevant actual working condition parameters of the gas turbine on site and historical data of the corresponding variable parameters may be obtained, input and output sample sets may be obtained, and after training, a training model of variable parameters a and b may be obtained.

Step 2: Substituting the variable parameter training model of the target nonlinear mechanism process into the general model of the target nonlinear mechanism process to obtain a trained model of the target nonlinear mechanism process of the nonlinear device. The trained model is a self-learning model with learning ability.

In this step, according to the association between the machine learning algorithm and the general model, a variable parameter training model of the target nonlinear mechanism process may be substituted into a general model of the target nonlinear mechanism process.

For example, still taking as an example the above-described process related to flow rate and pressure, the current training model of variable parameters a and b may be inputted into the above-mentioned formula (2) to obtain a general model of the process related to flow rate and pressure in the compressor of a gas turbine on site.

Step 3: Forming the trained models of all target nonlinear mechanism processes of the nonlinear device into a trained model of the nonlinear device.

In actual use, input parameters of the trained model may include input parameters required by the trained models of all target nonlinear mechanism processes.

It is thus clear that in the process of establishing an integrated energy system, it is necessary to construct models of a large number of devices, which usually include many nonlinear physical processes (also called mechanism processes), such as a process related to flow rate and pressure in the compressor of a gas turbine and a process of converting mechanical energy into pressure energy, and thus models of such devices are usually nonlinear models.

A method for constructing a nonlinear model in an embodiment of the present invention has been described in detail above. In addition, while the process of constructing a nonlinear model is usually complex, it achieves relatively high accuracy, but if the nonlinear model is directly used to run the corresponding control (for example, simulation or optimization) of the integrated energy system, then the real-time performance of simulation of the entire integrated energy system may be affected due to the relatively slow running speed of the nonlinear model.

Therefore, in an embodiment of the present invention, it is also preferable to linearize a trained nonlinear model, so as to improve the real-time performance of simulation of the integrated energy system.

Here, a method for linearizing a nonlinear model is proposed, comprising:

Step 1: Determining value ranges of each input parameter of a nonlinear model of each device.

For example, an effective power range is the range of 50% to 110% of the rated condition, and there are also a range of local ambient temperature changes, a range of ambient pressure changes, and so on.

Step 2: Dividing the value ranges of each input parameter into a plurality of subintervals on the basis of a plurality of interpolation points.

In this step, value ranges of each input parameter may be divided into a plurality of subintervals on the basis of a plurality of interpolation points according to an equalization criterion. Interpolation points may be determined by setting a relatively large number of interpolation points for a region with rapid nonlinear changes, and setting a relatively small number of interpolation points for a region with slow nonlinear changes.

For example, 40 points are interpolated for power range, 20 points are interpolated for ambient temperature, 5 points are interpolated for ambient pressure, etc.

Step 3: Determining a plurality of input sample values equally in each subinterval.

In this step, on the basis of an equalization criterion, a plurality of input sample values may be determined equally in each subinterval. For example, power and ambient temperature, etc., may be divided into equal parts in an actual domain.

Step 4: Traversing the input sample value combinations of each input parameter of the model, and using the nonlinear model to obtain an output sample value combination corresponding to each input sample value combination.

For example, corresponding to each set of input sample values obtained by traversal, there is a set of corresponding outputs, such as efficiency output, or fuel consumption, emission output, and running cost output.

Step 5: Generating a tensor table using all the input sample value combinations and corresponding output sample value combinations thereof.

For example, if the three-dimensional values of temperature, pressure, and power are known above, by looking up the tensor table, the value of efficiency may be obtained by interpolation.

Specifically, when a model of the device is used for simulation, the tensor table is searched according to the current value of each input parameter, and the corresponding data found in the tensor table are used for interpolation to obtain the corresponding output value. The current value of each input parameter may be a real value or a hypothetical value.

For example, there may be one or more tables for one device, such as a table for temperature, pressure, and power versus efficiency, a table for temperature, pressure, and power versus emissions, or a table corresponding to any other desired parameter. An interpolation algorithm may be selected according to the actual situation, for example, selecting a linear interpolation method or a nonlinear interpolation method. In one example, linear interpolation may be used for points that are close to each other, nonlinear interpolation may be used for points that are far apart, and so on.

The values of other output variables corresponding to the required temperature, pressure and performance may be obtained by spline interpolation of the three-dimensional values of temperature, pressure and power.

This general method uses a general program, and may be used to implement any specific model, such as a model of a heat pump, an internal combustion engine, a heat exchanger, etc.

Preferably, dividing the value ranges of each input parameter into a plurality of subintervals on the basis of a plurality of interpolation points is: dividing the value ranges of each input parameter into a plurality of subintervals on the basis of a plurality of interpolation points according to an equalization criterion.

Preferably, said equally determining a plurality of input sample values in each subinterval is: equally determining a plurality of input sample values in each subinterval according to an equalization criterion.

Preferably, during simulation or optimization, interpolation is performed on the tensor table according to the current value of each input parameter to obtain the corresponding output value.

On the basis of the above description, an embodiment of the present invention further provides an apparatus for controlling an integrated energy system.

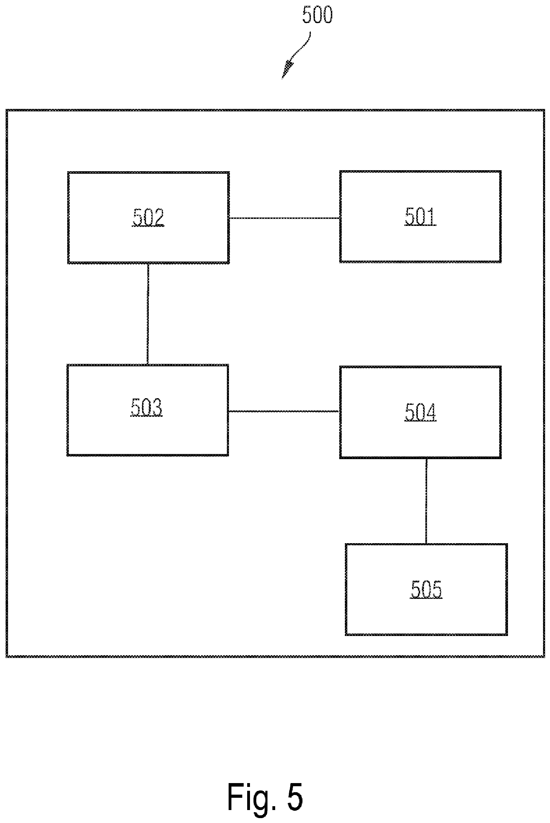

Fig. 5 is a block diagram of an apparatus for controlling an integrated energy system according to an embodiment of the present invention.

As shown in Fig. 5, the control apparatus 500 comprises:

a topological structure determining module 501, configured to determine the topological structure of an integrated energy system, the topological structure comprising the devices of the integrated energy system and the connection attributes between the devices;

a model determining module 502, configured to determine general models of the devices and a connector model corresponding to the connection attributes;

a simulation model forming module 503, configured to connect the general models by means of the connector model so as to form a simulation model of the integrated energy system;

a training module 504, configured to train the simulation model; and

a control command generating module 505, configured to generate a control command of the integrated energy system on the basis of the trained simulation model.

In one embodiment, the devices include linear devices and nonlinear devices;

the model determining module 502 is further configured to pregenerate general models of each linear device and general models of each nonlinear device, wherein generating general models of each nonlinear device comprises: determining complete design point data of each target nonlinear mechanism process of each nonlinear device; in a ratio of a similarity number supported by a similarity criterion to a similarity number based on design point data, establishing a descriptive formula of the nonlinear mechanism process to obtain a general model of the nonlinear mechanism process; a general model of the nonlinear mechanism process comprises variable parameters that change nonlinearly with actual working condition parameters; constructing a machine learning algorithm between the actual working condition parameters and the variable parameters, and establishing an association between the machine learning algorithm and the general model of the nonlinear mechanism process; and forming the general models of all target nonlinear general processes of each nonlinear device and the machine learning algorithm associated therewith into a general model of the nonlinear device.

In one embodiment, the training module 504 is configured to obtain historical data of the devices during the running of the simulation model; and train the general models on the basis of historical data of the devices.

In one embodiment, said training the general models on the basis of historical data of the devices comprises: a process of training general models of nonlinear devices on the basis of historical data of nonlinear devices;

the training module 504 is configured to, for each target nonlinear mechanism process of a nonlinear device, obtain actual working condition parameters and historical data of variable parameters corresponding to the target nonlinear mechanism process of the nonlinear device, and train the machine learning algorithm by using the historical data, so as to obtain a variable parameter training model of the target nonlinear mechanism process; substitute the variable parameter training model of the target nonlinear mechanism process into the general model of the target nonlinear mechanism process to obtain a trained model of the target nonlinear mechanism process of the nonlinear device; and form the trained models of all target nonlinear mechanism processes of the nonlinear device into a trained model of the nonlinear device.

In one embodiment, the nonlinear device comprises: a gas turbine and a heat pump:

target nonlinear mechanism processes of the gas turbine include: a process related to flow rate and pressure in an expansion turbine, and a process of energy conversion of thermal energy and mechanical energy; or target nonlinear mechanism processes of the heat pump include: a process of heat transfer, a process of converting thermal energy into kinetic energy, a process of pipeline resistance, and a process related to flow rate and pressure.

In one embodiment, the control command generating module 505 is further configured to receive a simulation task after said training the simulation model; run the simulation model on the basis of the simulation task, and output a simulation result; the simulation task comprises at least one of the following: a simulation task for device performance monitoring; a simulation task containing an assumed condition for operation; a simulation task for monitoring the performance of a connector model; and a simulation task for monitoring the overall performance of an integrated energy system.

In one embodiment, the control command generating module 505 is configured to receive an optimization task that contains an optimization objective and a constraint condition; input the constraint condition and the optimization objective into the simulation model; and enable the simulation model to output a control command that achieves the optimization objective.

Embodiments of the present invention further provide an apparatus for controlling an integrated energy system with a structure composed of a processor and a memory.

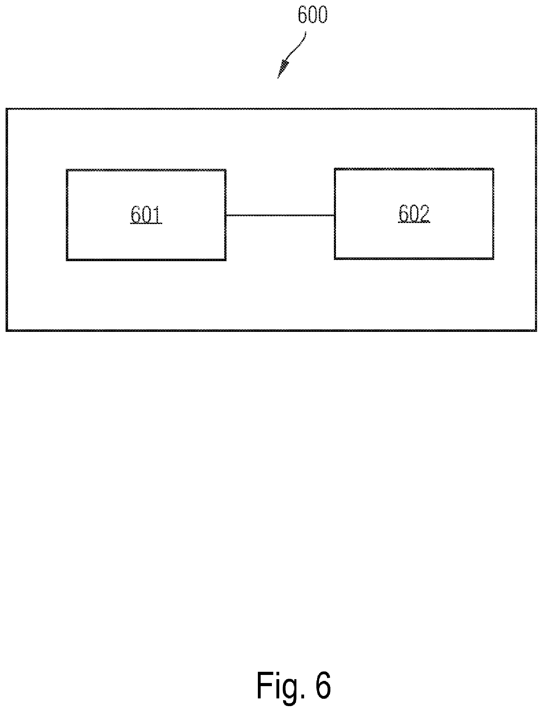

Fig. 6 is a structural diagram of an apparatus for controlling an integrated energy system with a processor-memory structure according to an embodiment of the present invention.

As shown in Fig. 6, an apparatus 600 for controlling an integrated energy system comprises a processor 601 and a memory 602;

an application program executable by the processor 601 is stored in the memory 602, configured to cause the processor 601 to execute any of the above-described methods for controlling an integrated energy system.

The memory 602 may be specifically implemented as an electrically erasable programmable read-only memory (EEPROM), a flash memory, a programmable read-only memory (PROM), or another storage medium. The processor 601 may be implemented to comprise one or more central processing units or one or more field programmable gate arrays, wherein the field programmable gate arrays integrate one or more central processing unit cores. Specifically, a central processing unit or central processing unit core may be implemented as a CPU or an MCU.

After a simulation model of an integrated energy system is established and the simulation model is trained on the basis of the above description, and the trained nonlinear model is linearized, the above processed simulation model may be conveniently used to perform various tasks, such as performing a simulation task or optimization task.

In an embodiment of the present invention, a simulation model platform for an integrated energy system mainly comprises a simulation environment and an optimization environment, and a simulation environment refers to the state of the integrated energy system at a certain moment, which may be a state analyzed by connecting the following measurement points, or a state analyzed by adding some operational assumptions. Different from simulation, the operation optimization environment refers to the overall optimal operation in a certain period of time, which relates to a time interval.

The simulation environment and optimization environment have respective simulation solvers and optimization solvers and respective intermediate interpreters, share one scene and problems to build a user graphical interface as an input system for semantics such as devices, measurement points, locations, and connection relationships, and, using their respective interpreters, form and solve mathematical problems received by their respective algorithms. Embodiments of the present invention further realize a simulation method and an optimization calculation method on the basis of a simulation model of an integrated energy system, and the simulation method realizes the performance monitoring, energy conservation management and system parameter optimization operation of the integrated energy system; the optimization method realizes the optimal scheduling to bear a certain load in a certain period of time.

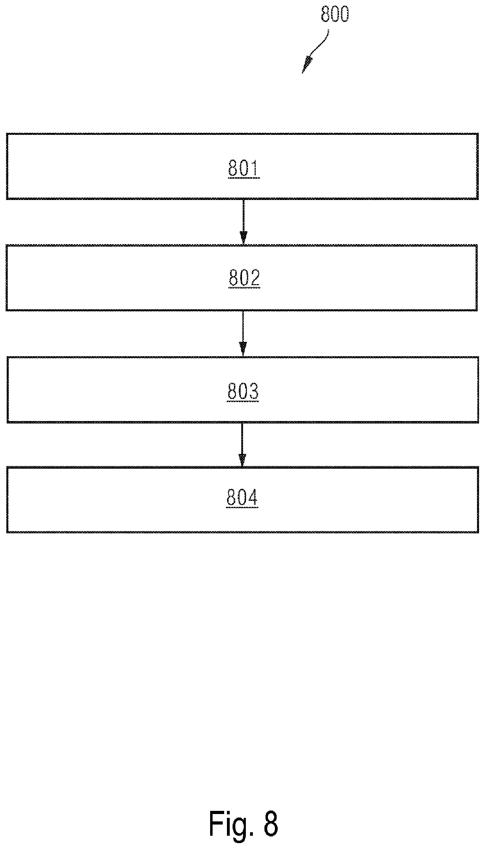

Fig. 8 is a flow chart of a simulation method for an integrated energy system according to an embodiment of the present invention.

As shown in Fig. 8, the method 800 comprises:

Step 801: Receiving a simulation task.

For example, a simulation task for device performance monitoring; a simulation task containing an assumed condition for operation; a simulation task for monitoring the performance of a connector model; and a simulation task for monitoring the overall performance of an integrated energy system are received from users, etc.

Step 802: Building a system of nonlinear equations on the basis of the simulation task and the simulation model of the integrated energy system.

Here, in response to the simulation task, a system of nonlinear equations is built on the basis of the power balance formula and performance constraint relationship in the simulation model.

Step 803: Solving the system of nonlinear equations on the basis of a linear programming algorithm to obtain a simulation result.

Here, linear programming algorithms include at least one of the following: a Mixed Integer Programming (MIP) algorithm; a Mixed Integer Linear Programming (MILP) algorithm, etc.

Step 804: Outputting the simulation result; the process of establishing the simulation model comprises: determining the topological structure of an integrated energy system, the topological structure comprising the devices of the integrated energy system and the connection attributes between the devices; determining general models of the devices and a connector model corresponding to the connection attributes; connecting the general models by means of the connector model so as to form a simulation model of the integrated energy system; and training the simulation model.

A nonlinear model in the simulation model has a tensor table after being trained and linearized. In step 803, when solving the system of nonlinear equations on the basis of a linear programming algorithm to obtain a simulation result, the tensor table of each nonlinear model may be searched according to the current value of the input parameter of the nonlinear model, and the corresponding value found from the tensor table may be used for interpolation to obtain the corresponding output value, which is the output value of the nonlinear model, thereby achieving a solution to the system of nonlinear equations with a linear programming algorithm.

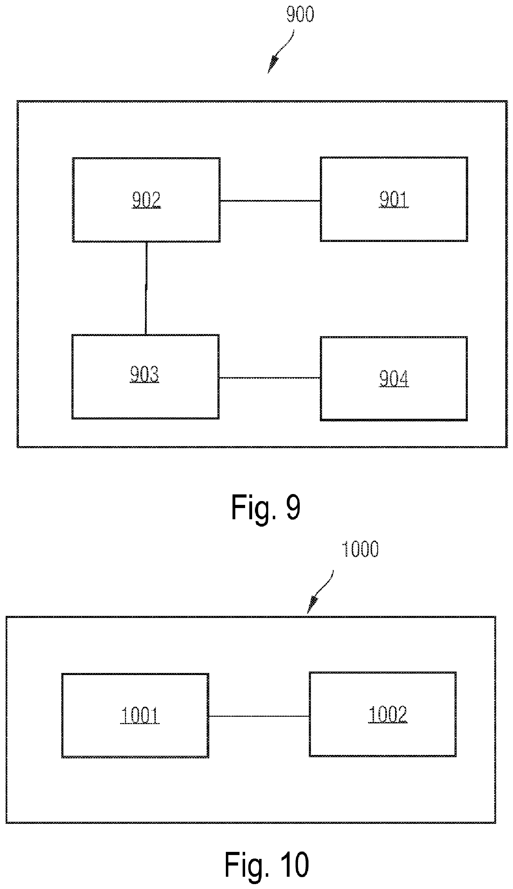

Fig. 9 is a structural diagram of a simulation apparatus for an integrated energy system according to an embodiment of the present invention.

As shown in Fig. 9, the simulation apparatus 900 for an integrated energy system comprises:

a receiving module 901, configured to receive a simulation task;
an equation system building module 902, configured to build a system of nonlinear equations on the basis of the simulation task and the simulation model of the integrated energy system; a solving module 903, configured to solve a system of nonlinear equations on the basis of a linear programming algorithm to obtain a simulation result;
an output module 904, configured to output the simulation result; the process of establishing the simulation model comprises: determining the topological structure of an integrated energy system, the topological structure comprising the devices of the integrated energy system and the connection attributes between the devices; determining general models of the devices and a connector model corresponding to the connection attributes; connecting the general models by means of the connector model so as to form a simulation model of the integrated energy system; and training the simulation model.

Fig. 10 is a structural diagram of a simulation apparatus for an integrated energy system with a processor-memory structure according to an embodiment of the present invention. As shown in Fig. 10, the simulation apparatus 1000 for an integrated energy system comprises a processor 1001 and a memory 1002; an application program executable by the processor 1001 is stored in the memory 1002, configured to cause the processor 1001 to execute any of the above-described methods for controlling an integrated energy system.

An exemplary simulation process of an integrated energy system on the basis of an embodiment of the present invention is described below.

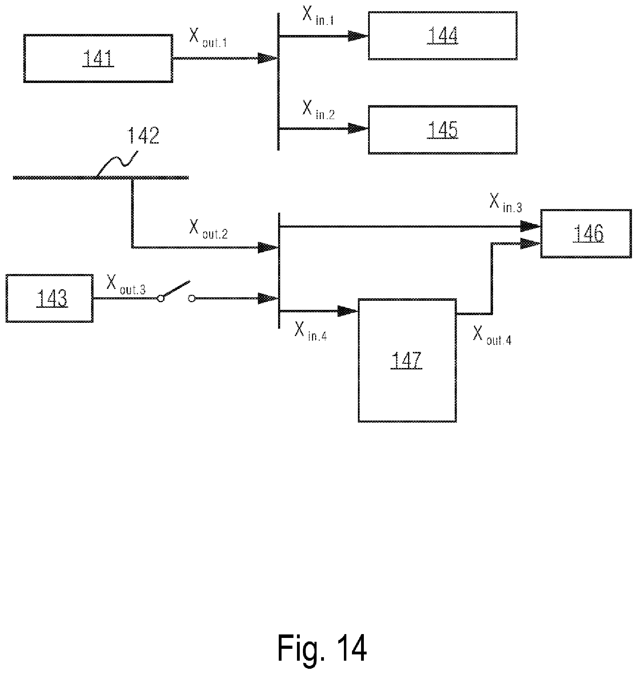

Fig. 14 is a system configuration diagram of a simulation example of an integrated energy system according to an embodiment of the present invention. The exemplary structure of a simulation model of an integrated energy system shown in Fig. 14 comprises a gas turbine model, an energy storage battery model, a photovoltaic model and three load models that have been trained and linearized. For the simple system shown in Fig. 14, the gas turbine supplies power to both load 1 and load 2, and the photovoltaic system and the grid jointly supply power to load 3. The variables marked in Fig. 14 represent the power supplied or consumed by different devices, respectively. Among them, the output of the gas turbine is $X_{out,1}$; the input to load 1 is $X_{in,1}$; the input to load 2 is $X_{in,2}$; the output of the grid is $X_{out,2}$; the output of the photovoltaic system is $X_{out,3}$; the input to the energy storage battery model is $X_{in,4}$; the output of the energy storage battery model is $X_{out,4}$; and the inputs to load 3 are $X_{in,3}$ and $X_{out,4}$.

For the integrated energy system as shown in Fig. 14, simulation calculations may be performed on each device and the entire network by using embodiments of the present invention. During simulation calculation, the following aspects need to be considered:

(1) Energy (power) balance in the system network:
Specifically, the following expressions are included:

$$X_{out,1} - X_{in,1} - X_{in,2} = 0 \qquad (3)$$

$$X_{out,2} + X_{out,3} - X_{in,3} - X_{in,4} = 0 \qquad (4)$$

(2) Relationship between load demand characteristics, expressed as follows:

$$X_{in,1} = L_1 \qquad (5)$$

$$X_{in,2} = L_2 \qquad (6)$$

$$X_{in,3} + X_{out,4} = L_3 \qquad (7)$$

(3) Relationship between photovoltaic power generation characteristics: The expression is:

$$X_{out,3} = PV(m, d, h, weather, \dots) \qquad (8)$$

(4) Performance constraint relationship between devices in the system.

For simulation solution, it is only necessary to obtain a solution that satisfies the equilibrium relationship and topological relationship, in which case the optimization objective may be setting a number on the right side of the equation that should be zero to a variable and setting the sum of squares of all the variables to the minimum, thereby transforming the equilibrium problem into an optimization problem and achieving a solution using various optimization solvers. By invoking the MILP algorithm, the state of each device in the system and the energy flow parameters in the network at the moment may be obtained by achieving a solution. In addition, two functions are provided: (1) Comparisons and corrections may be made with a sensor in the system. (2) Calculation results may be used to understand the operating status of a device on which it is difficult to deploy a sensor.

With the simulation solving function, it is also possible to understand in advance the impact of changes (including a parameter change) in a certain device in the system.

For example, after the photovoltaic output as shown in Fig. 14 is cut off, the second equilibrium equation above changes to: X out,2 + 0 • $X_{out,3}$ - $X_{in,3}$ - $X_{in,4}$ = 0; with others unchanged, the above-described solution process may be repeated to obtain a new set of parameters reflecting the impact of this change.

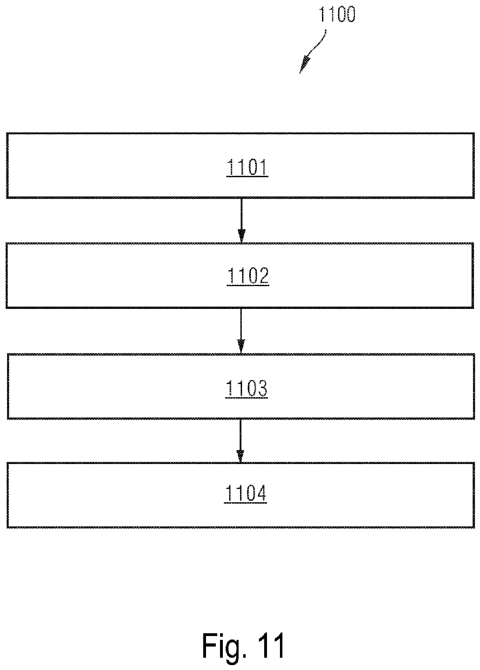

Fig. 11 is a flow chart of an optimization method for an integrated energy system according to an embodiment of the present invention.

As shown in Fig. 11, the method 1100 comprises:

Step 1101: Receiving an optimization task that contains an optimization objective.

Step 1102: Building a system of nonlinear equations on the basis of the optimization objective and the simulation model of the integrated energy system.

Here, in response to the optimization task, a system of nonlinear equations is built on the basis of the power balance formula and performance constraint condition in the simulation model, as well as the received optimization objective.

Step 1103: Solve the system of nonlinear equations on the basis of a linear programming algorithm to obtain an optimization result.

Step 1104: Outputting the optimization result; the process of establishing the simulation model comprises: determining the topological structure of an integrated energy system, the topological structure comprising the devices of the integrated energy system and the connection attributes between the devices; determining general models of the devices and a connector model corresponding to the connection attributes; connecting the general models by means of the connector model so as to form a simulation model of the integrated energy system; and training the simulation model.

A nonlinear model in the simulation model has a tensor table after being trained and linearized. In step 1103, when solving the system of nonlinear equations on the basis of a linear programming algorithm to obtain an optimization result, the tensor table of each nonlinear model may be searched according to the current value of the input parameter of the nonlinear model, and the corresponding value found from the tensor table may be used for interpolation to obtain the corresponding output value, which is the output value of the nonlinear model, thereby achieving a solution to the system of nonlinear equations with a linear programming algorithm.

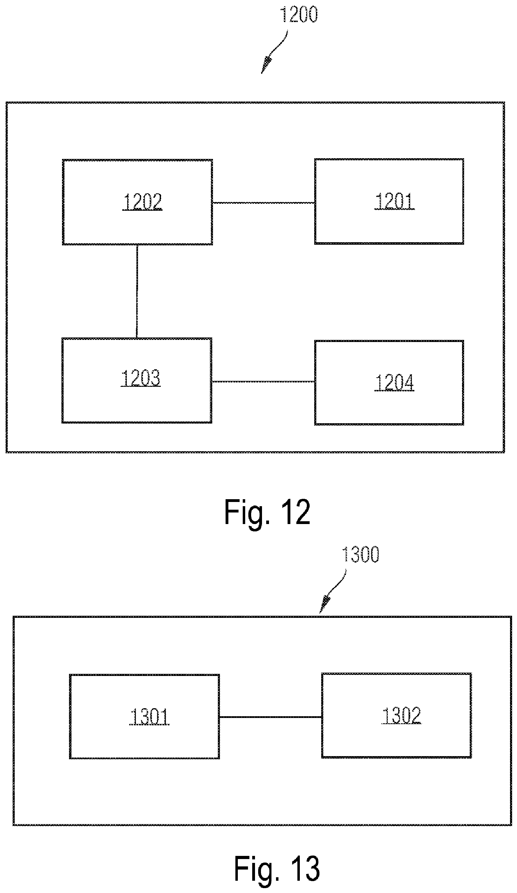

Fig. 12 is a structural diagram of an apparatus for optimizing an integrated energy system according to an embodiment of the present invention.

As shown in Fig. 12, the optimization apparatus 1200 for the integrated energy system comprises:

a receiving module 1201, configured to receive an optimization task that contains an optimization objective;
an equation system building module 1202, configured to build a system of nonlinear equations on the basis of the optimization objective and the simulation model of the integrated energy system;

a solving module 1203, configured to solve a system of nonlinear equations on the basis of a linear programming algorithm to obtain an optimization result;

an output module 1204, configured to output the optimization result; the process of establishing the simulation model comprises: determining the topological structure of an integrated energy system, the topological structure comprising the devices of the integrated energy system and the connection attributes between the devices; determining general models of the devices and a connector model corresponding to the connection attributes; connecting the general models by means of the connector model so as to form a simulation model of the integrated energy system; and training the simulation model.

Fig. 13 is a structural diagram of an optimization apparatus with a processor-memory structure for an integrated energy system according to an embodiment of the present invention. As shown in Fig. 13, the optimization apparatus 1300 of the integrated energy system comprises a processor 1301 and a memory 1302; an application program executable by the processor 1301 is stored in the memory 1302, configured to cause the processor 1301 to execute any of the above-described optimization methods for an integrated energy system.

For example, the optimization methods and optimization apparatuses described in Fig. 11 - 13 may be used to achieve optimal scheduling of production in the integrated energy system and staggered energy consumption in factories. An optimization algorithm, by an underlying control system, automatically performs optimal scheduling of controllable resources and accurately reflects effects produced by uncontrollable resources, while automatically identifying changes in the system, thereby realizing automatic and flexible changes. Accordingly, an optimization objective, comprising energy cost, carbon dioxide emissions, and efficiency, may be selected. First, on the basis of an accurate performance prediction model, the performance of system components may be accurately predicted under various boundary conditions including dynamic price systems and accurate weather forecasts, and inputs may be provided dynamically, preferably every 15 minutes (manual input in a page or EXCEL import, or automatic introduction through a connection to another information system). An accurate forecast of the load demand within the optimization time period is required. If necessary, any production plan may also be imported in various manners to ensure the accuracy of load forecasting. In addition, functions of predetermining some optimized operation strategies are provided for selection at any time, such as peak load shifting, frequency modulation and voltage modulation, and staggered operation of factories.

An exemplary optimization process of an integrated energy system according to an embodiment of the present invention is described below.

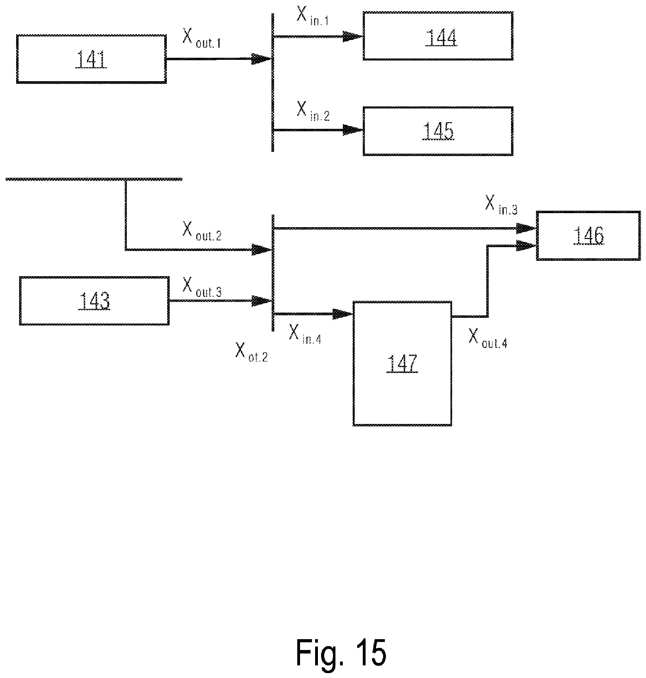

Fig. 15 is a system configuration diagram of an optimization example of an integrated energy system according to an embodiment of the present invention.

For the simple system shown in Fig. 15, the gas turbine supplies power to both load 1 and load 2, and the photovoltaic system and the grid jointly supply power to load 3. The variables marked in Fig. 15 represent the power supplied or consumed by different devices, respectively. Among them, the output of the gas turbine is $X_{out,1}$; the input to load 1 is $X_{in,1}$; the input to load 2 is $X_{in,2}$; the output of the grid is $X_{out,2}$; the output of the photovoltaic system is $X_{out,3}$; the input to the energy storage battery model is $X_{in,4}$; the output of the energy storage battery model is $X_{out,4}$; the inputs to load 3 are $X_{in,3}$ and $X_{out,4}$.

(1) The power balance equations of the system may be expressed as :

$$X_{out,1} - X_{in,1} - X_{in,2} = 0 \tag{9}$$

$$X_{out,2} + X_{out,3} - X_{in,3} - X_{in,4} = 0 \tag{10}$$

(2) The relationship between load demand characteristics is obtained according to a prediction result, which is expressed as:

$$X_{in,1} = L_1 \tag{11}$$

$$X_{in,2} = L_2 \tag{12}$$

$$X_{in,3} + X_{out,4} = L_3 \tag{13}$$

(3) Characteristics of photovoltaic power generation are functions of time (for example, month m, day d, hour h) and weather variables (weather), which may be expressed as:

$$X_{out,3}=PV(m,d,h,weather,…) \qquad (14)$$

In addition, energy that each device can provide or consume also satisfies respective constraint conditions, such as:

$$X_{out,1}\leq P_{GT,max} \qquad (15)$$

$$X_{in,4}\leq P_{BT,max} \qquad (16)$$

$$X_{out,4}\leq P_{BT,max} \qquad (17)$$

$$X_{in,4}\triangle t\leq C_{BT}(1-SOC) \qquad (18)$$

$$X_{out,4}\triangle t\leq C_{BT}SOC \qquad (19)$$

wherein $P_{GT,max}$ represents the maximum output power of the gas turbine, $P_{BT,max}$ represents the maximum battery charging and discharging power, $C_{BT}$ represents the battery capacity, and SOC represents the current storage percentage of the battery.

Besides considering the balance relationship and constraint relationship, for the optimization problem, the objective function also needs to be considered and, the function for calculating the cost of consumption by the system at any time is:

$$Cost_i=aX_{out,1}+bX_{out,2}+cX_{in,4}+dX_{out,4} \qquad (20)$$

wherein a, b, c, d are the systems of various costs, for example, a reflecting the operating cost of power generation by the gas turbine, b reflecting the electric power purchase cost of the grid, c and d respectively reflecting the cost of battery charging and discharging. Therefore, within a period of optimization, the total cost of consumption by the system is:

$$\text{Total Cost} = \sum_{i=1}^{N} Cost_i \qquad (21)$$

After these equations are integrated, algorithms such as MILP may be used to achieve a solution, thereby obtaining the scheduling solution with the lowest total system cost. Among them, the optimized variables are gas turbine power generation $X_{out,1}$, grid power purchase curve $X_{out,2}$, energy storage battery charging and discharging curves $X_{in,4}$ and $X_{out,4}$, which means that according to the load power demand and photovoltaic power supply capacity, the optimal strategies for power generation, power purchase, charging and discharging are determined.

It should be noted that not all the steps or modules in the above-described flows and structural diagrams are required, and certain steps or modules may be omitted as needed. The sequence of performing steps is not fixed and may be adjusted as needed. The division of modules is only intended for ease of description of the functional division adopted, and, in actual implementation, a module may be implemented by a plurality of modules, while functions of a plurality of modules may also be implemented by the same module, these modules being located in the same device or in different devices.

The hardware modules in the above-described embodiments may be implemented mechanically or electronically. For example, a hardware module may comprise a specially designed permanent circuit or logic element, for example, a special processor, an FPGA, or an ASIC, for completing specific operations. A hardware module may further comprise programmable logic or circuitry (for example, a general-purpose processor or any other programmable processor) that is temporarily configured by software to perform specific operations. Whether to implement a hardware module specifically in a mechanical manner or by using a circuit temporarily configured (for example, being configured by software) may be determined on the basis of cost and time considerations.

The present invention further provides a machine-readable medium that stores an instruction for causing a machine to implement a method as described herein. Specifically, a system or device equipped with a storage medium may be provided, the storage medium storing software program code for implementing the functions of any of the above-described embodiments, and a computer (for example, a CPU or an MPU) of the system or device is caused to read and execute the program code stored on the storage medium. In addition, by an instruction based on program code, an operating system, etc. operating on a computer may also be caused to complete part or all of the actual operations. It is also possible that functions of any one of the above-described embodiments may be implemented by writing program code read from a storage medium to a memory disposed in an expansion board inserted into a computer or to a memory disposed in an expansion unit connected to a computer, and then by, according to an instruction of program code, causing a CPU, etc. installed on the expansion board or expansion unit to execute some or all actual operations.

Examples of a storage medium for providing program code include a floppy disk, hard disk, magneto-optical disk, optical disk (for example, CD-ROM, CD-R, CD-RW, DVD-ROM, DVD-RAM, DVD-RW, or DVD+RW), magnetic tape, non-volatile memory card, and ROM. Optionally, program code may be downloaded from a server computer or cloud via a communication network.

While the present invention has been described and illustrated in detail above with reference to the drawings and preferred embodiments, the present invention is not limited to these disclosed embodiments, and those of ordinary skill in the art, on the basis of the above-mentioned embodiments, may appreciate that more embodiments of the present invention may be obtained by combining the code auditing means in the different embodiments described above and that these embodiments also fall within the protection scope of the present invention.

## Claims

1. A method (1100) for optimizing an integrated energy system, **characterized in that** the integrated energy system comprises nonlinear devices and **in that** the method comprises:

   receiving an optimization task that contains an optimization objective (1101);
   building a system of nonlinear equations on the basis of the optimization objective and a simulation model of the integrated energy system (1102);
   solving the system of nonlinear equations on the basis of a linear programming algorithm to obtain an optimization result (1103) ;
   outputting the optimization result (1104);
   the process of establishing the simulation model comprises:

   determining the topological structure of an integrated energy system, the topological structure comprising the devices of the integrated energy system and the connection attributes between the devices;
   determining general models of the devices and a connector model corresponding to the connection attributes;
   connecting the general models by means of the connector model so as to form a simulation model of the integrated energy system; and
   training the simulation model.

2. The method (1100) for optimizing an integrated energy system as claimed in claim 1, **characterized in that** the integrated energy system further comprises linear devices; and **in that** the method further comprises a process of pregenerating general models of each linear device and a process (400) of pregenerating general models of each nonlinear device, wherein the process (400) of generating general models of each nonlinear device comprises:

   determining complete design point data of each target nonlinear mechanism process of each nonlinear device (401);
   in a ratio of a similarity number supported by a similarity criterion to a similarity number based on design point data, establishing a descriptive formula of the nonlinear mechanism process to obtain a general model of the nonlinear mechanism process; a general model of the nonlinear mechanism process comprises variable parameters that change nonlinearly with actual working condition parameters (402);
   constructing a machine learning algorithm between the actual working condition parameters and the variable parameters (403); and
   forming the general models of all target nonlinear general processes of each nonlinear device and the machine learning algorithm associated therewith into a general model of the nonlinear device (404).

3.  The method (1100) for optimizing an integrated energy system as claimed in claim 2, **characterized in that** said training the simulation model comprises:

    obtaining historical data of the devices during the running process of the simulation model; and
    training the general models on the basis of historical data of the devices.

4.  The method (1100) for optimizing an integrated energy system as claimed in claim 3, **characterized in that** said training the general models on the basis of historical data of the devices comprises: a process of training general models of nonlinear devices on the basis of historical data of nonlinear devices; the process comprises:

    for each target nonlinear mechanism process of a nonlinear device, obtaining actual working condition parameters and historical data of variable parameters corresponding to the target nonlinear mechanism process of the nonlinear device, and training the machine learning algorithm by using the historical data, so as to obtain a variable parameter training model of the target nonlinear mechanism process;
    substituting the variable parameter training model of the target nonlinear mechanism process into the general model of the target nonlinear mechanism process to obtain a trained model of the target nonlinear mechanism process of the nonlinear device; and
    forming the trained models of all target nonlinear mechanism processes of the nonlinear device into a trained model of the nonlinear device.

5.  The method (1100) for optimizing an integrated energy system as claimed in claim 1, **characterized in that** the nonlinear device comprises: a gas turbine and a heat pump; target nonlinear mechanism processes of the gas turbine include:

    a process related to flow rate and pressure in an expansion turbine, and a process of energy conversion of thermal energy and mechanical energy;
    target nonlinear mechanism processes of the heat pump include: a process of heat transfer, a process of converting thermal energy into kinetic energy, a process of pipeline resistance, and a process related to flow rate and pressure.

6.  The method (1100) for optimizing an integrated energy system as claimed in any of claims 1 - 5, **characterized in that** the linear programming algorithm comprises at least one of the following: a Mixed Integer Programming (MIP) algorithm; a Mixed Integer Linear Programming (MILP) algorithm.

7.  An apparatus (1200) for optimizing an integrated energy system, **characterized in that** the integrated energy system comprises nonlinear devices, and **in that** the apparatus (1200) comprises:

    a receiving module (1201), configured to receive an optimization task that contains an optimization objective;
    an equation system building module (1202), configured to build a system of nonlinear equations on the basis of the optimization objective and a simulation model of the integrated energy system;
    a solving module (1203), configured to solve a system of equations on the basis of a linear programming algorithm to obtain an optimization result;
    an output module (1204), configured to output the optimization result;
    the process of establishing the simulation model comprises:

    determining the topological structure of an integrated energy system, the topological structure comprising the devices of the integrated energy system and the connection attributes between the devices;
    determining general models of the devices and a connector model corresponding to the connection attributes;
    connecting the general models by means of the connector model so as to form a simulation model of the integrated energy system; and
    training the simulation model.

8.  The apparatus (1200) for optimizing an integrated energy system as claimed in claim 7, **characterized in that** the integrated energy system further comprises linear devices;
    the process of establishing the simulation model further comprises: a process of pregenerating general models of each linear device and general models of each nonlinear device, wherein the process of generating general models of each nonlinear device comprises: determining complete design point data of each target nonlinear mechanism process of each nonlinear device; in a ratio of a similarity number supported by a similarity criterion to a similarity number based on design point data, establishing a descriptive formula of the nonlinear mechanism process to obtain a general model of the nonlinear mechanism process; a general model of the nonlinear mechanism process comprises variable parameters that change nonlinearly with actual working condition parameters; constructing a machine learning algorithm between the actual working condition parameters and the variable parameters, and establishing an association between the machine learning algorithm and the general model of the nonlinear mechanism process; and forming the general models of all target nonlinear general processes of each nonlinear device and the machine learning algorithm associated therewith into a general model of the nonlinear device.

9. The apparatus (1200) for optimizing an integrated energy system as claimed in claim 7, **characterized in that** the linear programming algorithm comprises at least one of the following: a MIP algorithm; a MILP algorithm.

10. An apparatus (1300) for optimizing an integrated energy system, **characterized in that** the apparatus comprises a processor (1301) and a memory (1302);
an application program executable by the processor (1301) is stored in the memory (1302), configured to cause the processor (1301) to execute the method for optimizing an integrated energy system as claimed in any of claims 1 to 6.

11. A computer-readable storage medium, **characterized in that** a computer-readable instruction is stored therein, the computer-readable instruction being configured to execute the method for optimizing an integrated energy system as claimed in any of claims 1 to 6.

Fig. 1

Fig. 2

Fig. 3

400

```
┌─────────────────────────────────────┐
│                 401                  │
└─────────────────────────────────────┘
                    │
                    ▼
┌─────────────────────────────────────┐
│                 402                  │
└─────────────────────────────────────┘
                    │
                    ▼
┌─────────────────────────────────────┐
│                 403                  │
└─────────────────────────────────────┘
                    │
                    ▼
┌─────────────────────────────────────┐
│                 404                  │
└─────────────────────────────────────┘
```

# Fig. 4

500

Fig. 5

600

Fig. 6

Fig. 7

800

```
┌─────────────────────────────┐
│            801              │
└─────────────────────────────┘
              │
              ▼
┌─────────────────────────────┐
│            802              │
└─────────────────────────────┘
              │
              ▼
┌─────────────────────────────┐
│            803              │
└─────────────────────────────┘
              │
              ▼
┌─────────────────────────────┐
│            804              │
└─────────────────────────────┘
```

Fig. 8

Fig. 9

Fig. 10

1100

```
┌─────────────────────────────────┐
│             1101                │
└─────────────────────────────────┘
                │
                ▼
┌─────────────────────────────────┐
│             1102                │
└─────────────────────────────────┘
                │
                ▼
┌─────────────────────────────────┐
│             1103                │
└─────────────────────────────────┘
                │
                ▼
┌─────────────────────────────────┐
│             1104                │
└─────────────────────────────────┘
```

Fig. 11

1200

Fig. 12

1300

Fig. 13

141

$X_{out.1}$

$X_{in.1}$

144

$X_{in.2}$

145

142

$X_{out.2}$

$X_{in.3}$

146

143

$X_{out.3}$

$X_{in.4}$

$X_{out.4}$

147

Fig. 14

Fig. 15

## INTERNATIONAL SEARCH REPORT

| | |
|---|---|
| International application No. | |
| | **PCT/CN2019/109668** |

**A. CLASSIFICATION OF SUBJECT MATTER**

G06N 20/00(2019.01)i; G06Q 10/04(2012.01)i

According to International Patent Classification (IPC) or to both national classification and IPC

**B. FIELDS SEARCHED**

Minimum documentation searched (classification system followed by classification symbols)

G06N; G06Q

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: 参数, 非线性, 建模, 系统, 原理, 能源, 优化, 机器学习, 模型, 燃气轮机, 热泵, 公式, 非线性设备, 相似性, 设计, 设备, 基理, component, optimization, GUI, model, plan, linear, parameter, node, power, system, machine, learning

**C. DOCUMENTS CONSIDERED TO BE RELEVANT**

| Category* | Citation of document, with indication, where appropriate, of the relevant passages | Relevant to claim No. |
|---|---|---|
| Y | CN 102073272 A (BEIJING ENNETT DISTRIBUTED ENERGY TECHNOLOGY CO., LTD.) 25 May 2011 (2011-05-25) description, paragraphs [0028]-[0043], and figures 1-7 | 1-11 |
| Y | CN 103544551 A (PROCESS INTEGRATION LIMITED) 29 January 2014 (2014-01-29) description, paragraphs [0049]-[0075] | 1-11 |
| Y | CN 103597413 A (SIEMENS AKTIENGESELLSCHAFT) 19 February 2014 (2014-02-19) description, paragraphs [0008]-[0040] | 2, 8 |
| A | CN 108206543 A (NORTHEASTERN UNIVERSITY) 26 June 2018 (2018-06-26) entire document | 1-11 |
| A | US 2012239169 A1 (ROCKWELL AUTOMATION TECHNOLOGIES, INC.) 20 September 2012 (2012-09-20) entire document | 1-11 |

☐ Further documents are listed in the continuation of Box C.　　☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **15 April 2020** | **24 April 2020** |

| Name and mailing address of the ISA/CN | Authorized officer |
|---|---|
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/109668**

| Patent document cited in search report | | | Publication date (day/month/year) | Patent family member(s) | | | Publication date (day/month/year) |
|---|---|---|---|---|---|---|---|
| CN | 102073272 | A | 25 May 2011 | None | | | |
| CN | 103544551 | A | 29 January 2014 | None | | | |
| CN | 103597413 | A | 19 February 2014 | US | 2014100703 | A1 | 10 April 2014 |
| | | | | JP | 2014525063 | A | 25 September 2014 |
| | | | | WO | 2012164075 | A2 | 06 December 2012 |
| | | | | EP | 2697695 | A2 | 19 February 2014 |
| | | | | RU | 2013157156 | A | 20 July 2015 |
| CN | 108206543 | A | 26 June 2018 | None | | | |
| US | 2012239169 | A1 | 20 September 2012 | EP | 2500787 | A1 | 19 September 2012 |
| | | | | CN | 102707621 | A | 03 October 2012 |

Form PCT/ISA/210 (patent family annex) (January 2015)